# EUROPEAN PATENT SPECIFICATION

(11) **EP 2 822 246 B1**
(45) Date of publication and mention of the grant of the patent: **06.04.2016**
(21) Application number: 13175360.0
(22) Date of filing: 05.07.2013
(51) Int. Cl.: H04L 29/06

(54) **A method and system to include a content stream in a multimedia conference**
Verfahren und System zur Aufnahme eines Inhaltstroms in eine Multimedia-Konferenz
Procédé et système pour inclure un flux de contenu dans une conférence multimédia

(43) Date of publication of application: 07.01.2015
(73) Proprietor: ALCATEL LUCENT, 92100 Boulogne-Billancourt (FR)
(72) Inventor: Helbert, Emmanuel, 67400 Illkirch (FR); Warichet, Sebastien, 92707 Colombes (FR)
(74) Representative: Sciaux, Edmond

(56) References cited:
- US-A1- 2009 290 012
- US-A1- 2013 103 770

## Description

### FIELD OF THE INVENTION

The present invention relates to multimedia conferencing.

### BACKGROUND OF THE INVENTION

Multimedia conferencing system offers means to participants for interacting together. A broad variety of connection types to a multimedia conference are usable, such as but not limited to, dedicated visio-conferencing access, broadband access, landline access, wireless access. Multimedia conferencing service experience is bounded to connection type capabilities. As a non limiting example, a wireless access with enforced data transfer restriction, connecting to a multimedia conferencing system, may not benefit of all multimedia conference advantages compared to a connection through a broadband access.

It may be needed for participants to share a supplementary multimedia content located on a content server, with others participants in the multimedia conference. Operation of sharing a supplementary multimedia content in a multimedia conference may enable participants to comment this supplementary multimedia content, or make this content available for participants unable to access it.

Nevertheless, the fact of retrieving the supplementary multimedia content from a content server location to the participants' side, then embedding it on the multimedia conference streaming to share it on the conference, consumes additional connection resources. In a non limiting example, a participant is involved in a multimedia conference through a wireless access, and is sharing a supplementary multimedia content located on a content server. He may then experience a degraded quality of multimedia conferencing because additional resources of his limited connection are allocated to the retrieval of the supplementary multimedia content.

US 2009/290012 A1 discloses a method for providing video content in a video conference. US 2013/103770 A1 discloses a system for enabling participants of an online broadcast to interact with multimedia content during the online broadcast.

### SUMMARY OF THE INVENTION

The invention is related to a method for including a supplementary multimedia content stream in a Multimedia Conference hosted by a Multimedia Conferencing System entity according to claim 1, a Multimedia Streaming Gateway entity according to claim 10 and an Extended Multimedia Conferencing System entity according to claim 11. Further embodiments of the invention are defined by the dependent claims.

### BRIEF DESCRIPTION OF THE FIGURES

Some embodiments of the present invention are now described, by way of example only, and with reference to the accompanying drawings, in which:
- FIG. 1 a is a schematic block diagram of a system comprising a Multimedia Conferencing System entity, a Multimedia Streaming Gateway entity and a Content Server entity according to a first example of the invention,
- FIG. 1b is a schematic block diagram of a system comprising a Multimedia Conferencing System entity, a Multimedia Streaming Gateway entity and a Content Server entity according to a second example of the invention,
- FIG. 2 is a flowchart showing steps performed to execute an example of the method to include a supplementary multimedia content in a multimedia conference, according to embodiments of the invention,
- FIG. 3a is a schematic block diagram of a Multimedia Streaming Gateway entity located in a Multimedia Conferencing System entity, according to another example of the invention,
- FIG. 3b is a schematic block diagram of a Multimedia Streaming Gateway entity located in a Content Server entity, according to another example of the invention,
- FIG. 3c is a schematic block diagram of a Multimedia Streaming Gateway entity located in a participant's End User terminal, according to another example of the invention.

The same reference number represents the same element to the same type of element on all drawings, unless stated otherwise.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

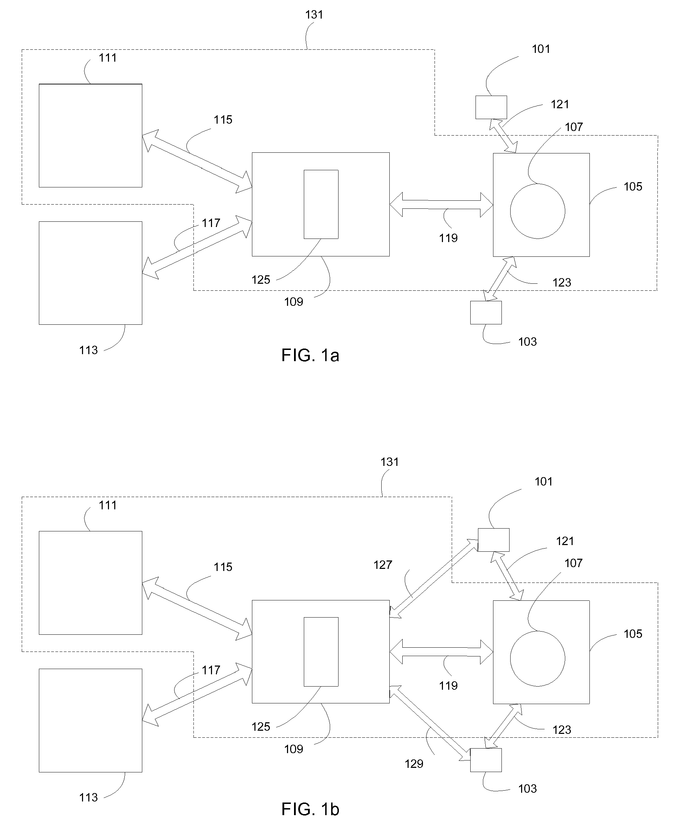

Referring to FIG. 1a, a Multimedia Conferencing System entity 105, located in a communication network, offers means for a first participant connected to the Multimedia Conferencing System entity 105 through a first End User Terminal 101. A second participant is connected to the Multimedia Conferencing System entity 105 through a second End User Terminal 103. The first participant and the second participant can thus interact together in a Multimedia Conference 107.

In the invention an End User Terminal can be for example a mobile phone, a landline phone, a computer and a variety of other user equipments for communication.

Multimedia Conferencing System entity, Multimedia Conference, End User Terminal terminologies will be referred hereinafter respectively by MCS, MC and EUT.

The MCS 105 is coupled with a Multimedia Streaming Gateway entity 109.

A Multimedia Streaming Gateway entity offers means to broadcast streaming of multimedia content, said entity being located in a communication network. In a non limiting example, said communication network is an Internet Protocol based network.

In an embodiment, the Multimedia Streaming Gateway entity 109 is located on a standalone device.

The MCS 105 and the Multimedia Streaming Gateway entity 109 are coupled through an interface I_{MCS} 119. Content request, stream control or multimedia content flow may be carried out over interface I_{MCS} 119. In a communication network, functionalities of such interface may be carried out by a plurality of means, such as but not limited to, Internet Protocol or a dedicated multimedia conferencing access.

A first Content Server entity 111 and a second Content Server entity 113 offer storage and streaming functionalities of multimedia content, entities being located in a communication network.

Multimedia Streaming Gateway entity and Content Server entity terminologies will be referred later on respectively by MSGW and CS.

The MSGW 109 is coupled with the first CS 111 and with the second CS 113 respectively through first interface I_{CS-111} 115 and second interface I_{CS-113} 117. Content request, stream control or multimedia content flow may be carried out over first interface I_{CS-111} 115 and second interface I_{CS-113} 117. In a communication network, functionalities of such interfaces may be carried out by a plurality of means, such as but not limited to, Internet Protocol.

First participant and second participant are involved in the MC 107. Respectively with their first EUT 101 and second EUT 103, first participant and second participant interact with the MCS 105 through a first interface I_{EUT-101} 121 for first EUT 101, and a second interface I_{EUT-103} 123 for second EUT 103.

Content request, stream control or multimedia content flow may be carried out over first interface I_{EUT-101} 121 and second interface I_{EUT-103} 123. In a communication network, functionalities of such interfaces may be carried out by a plurality of means, such as but not limited to, Internet Protocol over broadband access or wireless access.

Characteristics of first interface I_{EUT-101} 121 and second interface I_{EUT-103} 123 are defined by:
- the Multimedia Conferencing System entity 105 capabilities. For example, multimedia capabilities of the MCS may be restrained to a variety of multimedia codecs due to software or hardware limitation.
- the Multimedia Conference 107 characteristics. For example, a rule on maximum quality of multimedia broadcasting in a MC may be enforced, for purpose of saving connection resources.
- the first and second participants' End User Terminals 101 and 103 capabilities. For example, a first participant connected through a low cost mobile device may be restricted to usage of low quality multimedia broadcasting.

In another embodiment, the Multimedia Streaming Gateway entity 109 comprises a Streaming Management Unit 125 able to adapt characteristics of incoming streams to the capabilities of the MCS 105 or the characteristics of the MC 107. For example, the characteristics of the MC may cover the fact all participants are using the same kind of End User Terminals.

In non limiting examples, the Streaming Management Unit 125 performs the below functionalities:
- transcoding audio,
- transcoding video,
- extracting audio or video streams from a multimedia stream,
- synchronizing audio and video streams,
- buffering audio or video streams,
- converting any transport protocol to another as needed, depending on MCS 105 capabilities or MC 107 characteristics or CS 111 capabilities. In a non limitative example, Streaming Management Unit 125 converts Hypertext Transfer Protocol based multimedia streaming to Real-time Protocol based multimedia streaming.

In another embodiment, a first Extended Multimedia Conferencing System entity 131 comprises:
- The Multimedia Streaming Gateway entity 109,
- The Multimedia Conferencing System entity 105,
- The Content Server Entity 111.

Referring to FIG. 1b, it is shown another embodiment of the invention. In this embodiment, the described example comprises all the different elements present in FIG. 1 a. In this example, first EUT 101 and second EUT 103 respectively from first participant and second participant are coupled with the MSGW 109 respectively through a first interface I_{MSGW-101} 127 and a second interface I_{MSGW-103} 129. Advantageously in this example, first participant's EUT 101 and second participant's EUT 103 can sends supplementary multimedia content streaming requests directly to MSGW 109 through respective first interface I_{MSGW-101} 127 and second interface I_{MSGW-103} 129.

Content request, stream control may be carried out over first interface interface I_{MSGW-101} 127 and second interface I_{MSGW-103} 129. In a communication network, functionalities of such interfaces may be carried out by a plurality of means, such as but not limited to, Internet Protocol.

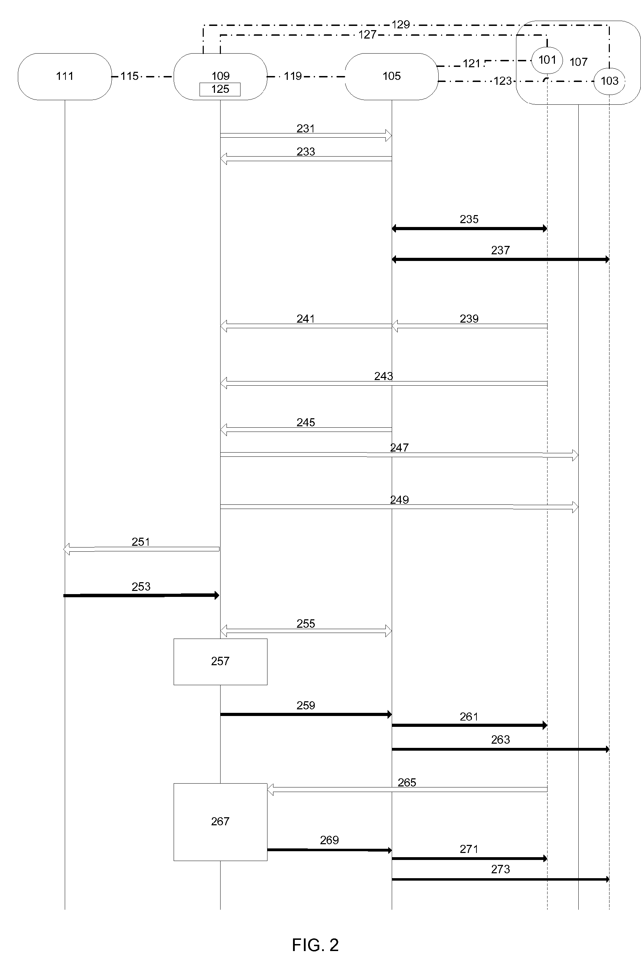

Referring to FIG. 2, an example of a method according to the invention is shown through a flow chart. This method is further described by detailing the different steps that are performed between the different elements present in FIG. 1 a and FIG. 1 b. Following steps of execution are not necessarily to be performed in their order of appearance in the below description, some of the steps being optional or suggesting alternative realization of the invention.

In this flow chart, the full arrows schematize data transfer of multimedia content. The double sided full arrows depict bi-directional data transfer of multimedia content between entities. The empty arrows schematize exchange of request or control messages or actions such as registration or connection subsequent to a request, for example. Similarly, the empty double sided arrow schematizes bi-directional exchange of request or control messages or actions such as registration or connection subsequent to a request, for example.

The MSGW 109 is registered in a MCS 105 by the following process:
- in a first step 231, the MSGW 109 initiates a registering request to the MCS 105, said registering request being carried out over interface I_{MCS} 119,
- in a second step 233, the MCS 105 acknowledges to the MSGW 109 its registration, said acknowledgment being carried out through messaging over interface I_{MCS} 119.

Alternatively, in an embodiment not depicted in FIG.2, in a first step, the MCS 105 initiates a registering request to the MSGW 109, and then in a second step, the MSGW 109 registers in the MCS 105.

Referring to a next step 235, the first participant is connected to the MC 107 through the first EUT 101. The First EUT 101 is interfaced with the MCS 105 with a Real-time Transport Protocol connexion using audio codec a1 and video codec v1 as characteristics of interface I_{EUT-101} 121.

Referring to a next step 237, the second participant is connected to the MC 107 through the second EUT 103 interfaced with the MCS 105 with a Real-time Transport Protocol connexion using audio codec a2 and video codec v2 as characteristics of interface I_{EUT-103} 123.

In an embodiment, at a next step 239, the first participant's EUT 101 issues a request to broadcast a supplementary multimedia content in the MC 107, said request being addressed to the MSGW 109, and said content being located on the CS 111. The request to broadcast the supplementary multimedia content is received by the MCS 105, and then the MCS 105 forwards the said request to the MSGW 109 at a next step 241.

Alternatively, in another embodiment, at a next step 243, the first participant's EUT 101 issues a request to broadcast a supplementary multimedia content on the MC 107, said request being addressed to the MSGW 109, and said content being located on the CS 111; the request to broadcast the supplementary multimedia content is received by MSGW 109 through the interface I_{MSGW-101} 127 between the first participant's EUT 101 and the MSGW 109. Similarly, but not depicted on FIG. 2, second participant's EUT 103 shall issue a request for broadcasting a supplementary multimedia content to the MSGW 109 through the interface I_{MSGW-103} 129.

In another embodiment not described on FIG. 2, first participant's EUT 101 issues a request to broadcast a supplementary multimedia content on the MC 107, said request being addressed to the MSGW 109, and said content being located on a CS 111; the request to broadcast the supplementary multimedia content embeds in this embodiment, a content identifier. Additional purpose of the content identifier is to identify the CS 111 hosting the supplementary multimedia content to be streamed on the MC 107.

The content identifier is advantageous for the MSGW 109 to forward the request to broadcast the supplementary multimedia content, said MSGW 109 being coupled with several Content Server entities, as depicted in FIG. 1 a and FIG. 1b with first CS 111 and second CS 113.

In an embodiment, at a next step 245, the MCS 105 invites the MSGW 109 to connect to the MC 107. Acknowledging this invitation at a next step 247, MSGW 109 connects to the MC 107 through the MCS 105.

Alternatively, in another embodiment, at another step 249, MSGW 109 connects spontaneously to the MC 107.

These previous steps of invitation and connection or spontaneous connection of the MSGW 109 could have occurred for example after the registration step of the MSGW 109. In these eventualities, the issue of a request to stream a supplementary multimedia content in the MC 107 is optional for the MSGW 109 to be connected in the MC 107.

In another embodiment not depicted in FIG. 2, steps performed at step 247 or at step 249, describe a conventional connection process of the MSGW 109 acting as a participant, in the MC 107 hosted by the MCS 105. Said connection between the MSGW 109 and the MC 107 hosted by the MCS 105, has a set of characteristics that fulfill the criterions defined by:
- the MCS 105 entity capabilities,
- the MC 107 characteristics,
- the MSGW 109 capabilities.

In a non limiting example, the MSGW 109 is connected in the MC 107 using a Real-Time Protocol link with audio codec a4 and video codec v4 as characteristics.

Referring to a further step 251, the MSGW 109 forwards the request to stream supplementary multimedia content, said request being addressed to the CS 111 and carried out over interface I_{CS-111} 115.

Referring to a next step 253, CS 111 streams over interface I_{CS-111} 115 the requested supplementary multimedia content to the MSGW 109.

In a non limiting example, streaming from the CS 111 to the MSGW 109 uses audio codec a3 and video codec v3 as characteristics of the stream of the supplementary multimedia content.

In another non limiting example, components of requested supplementary multimedia content are separate streams, one stream for audio, another one for video, another one for subtitles.

Referring to a next step 255, the MSGW 109 and the MCS 105 exchange negotiation messages for the purpose of defining the characteristics of the supplementary multimedia content to be streamed from the MSGW 109 to the MCS 105, over the interface I_{MCS} 119.

In an embodiment, in this step, the MSGW 109 interrogates the MCS 105 regarding the streaming characteristics that are currently being used in the MC 107 by first participant's EUT 101 and second participant's EUT 103. The MCS 105 provides then to the MSGW 109 the list of in-use streaming characteristics. Eventually, in another embodiment, MCS 105 may recommend a set of streaming characteristics to the MSGW 109. In a non limitative example, this step 255 is performed according to Session Description Protocol Capability Negotiation standard, well-known by the man skilled in the art.

Referring to a next step 257, the MSGW 109 processes the streaming of the supplementary multimedia content by the CS 111.

In an embodiment, in this step, the MSGW 109 adapts the characteristics of the stream (audio codec a3, video codec v3) to the capabilities of the MCS 105 that provides no support of audio codec a3 and video codec v3. Characteristics adaptation can be done through an audio/video transcoding process for example, that would transcode the audio codec a3 and video codec v3 into a set of audio and video codecs that have been negotiated as described at step 255 and usable by the MCS 105.

In another embodiment not schematized in FIG. 2, MSGW 109 adapts the characteristics of the stream audio codec a3, video codec v3 to the characteristics of the MC 107 in which such audio and video codecs are not used by interfaces between first participant's EUT 101 and second participant's EUT 103 and MCS 105.

In another embodiment not schematized in FIG. 2, MSGW 109 streams with the same characteristics, the supplementary multimedia content from the CS 111, to the MCS 105.

In another embodiment not schematized in FIG. 2, MSGW 109 adapts the streaming characteristics of the subtitles of the supplementary multimedia content. In non limiting examples, adaptation of subtitles characteristics may concern language of subtitles or font size of the subtitles.

In another embodiment, MSGW 109 adapts streaming from CS 111 by operating the Stream Management Unit 125 comprised in the MSGW 109.

In a non limiting example at step 257, Stream Management Unit 125 from MSGW 109 adapts audio codec a3 and video codec v3 of content streamed from CS 111, to audio codec a4 and video codec v4 that are compliant with MCS 105 capabilities.

Referring to another step 259, MSGW 109 provides the supplementary multimedia content with adapted audio codec a4 and video codec v4 characteristics, streamed from the CS 111, to the MCS 105.

Referring to a next steps 261 and another step 263, MCS 105 broadcasts the supplementary multimedia content in the MC 107 respectively to first participant's EUT 101 and second participant's EUT 103, said broadcast being performed according to characteristics of respective first interface I_{EUT-101} 121 and second interface I_{EUT-103} 123.

Referring to a further step 265, the first participant's EUT 101 sends a request to control the playback of the broadcast of the supplementary multimedia content in the MC 107. Said request being addressed to the MSGW 109.

Referring to a next step 267, the MSGW 109 receives request to control playback of the broadcast of the supplementary multimedia content, and operates accordingly control on the playback of the streaming of the supplementary multimedia content.

The MSGW 109 provides the controlled streaming of the supplementary multimedia content to the MCS 105 at a next step 269.

Referring to a next step 271 and another step 273, the MCS 105 broadcasts to first participant's EUT 101 and second participant's EUT 103 in the MC 107, the controlled stream of the supplementary multimedia content.

In an embodiment not depicted in FIG. 2, second participant's EUT 103 may send a request to control the playback of the broadcast of the supplementary multimedia content in the MC 107, similarly to the step performed by first participant's EUT 101, at step 263.

In an embodiment not schematized in FIG. 2, first participant's EUT 101 or second participant's EUT 103 sends the request to control the playback of the broadcast of the supplementary multimedia content to the MCS 105. Said request being forwarded by the MCS 105 to the MSGW 109.

In embodiments not depicted in FIG. 2, non extensive list of stream control functions available to the first participant's EUT 101 or the second participant's EUT 103 can be such as, starting the playback of the broadcast of the supplementary multimedia content, pausing it, resuming it, stopping it, fast forwarding or fast reversing it.

In another embodiment not depicted in FIG. 2, broadcast of the supplementary multimedia content in the MC 107, is performed automatically by the MCS 105 at step 259 without a control request sent by first participant's EUT 101 or second participant's EUT 103.

In another embodiment, first participant's EUT 101 requests to pause the audio playback of the broadcast of the supplementary multimedia content, video playback being broadcasted in the MC 107, and then requests to resume the audio playback.

In another embodiment, second participant's EUT 103 requests to pause the video playback of the broadcast of the supplementary multimedia content, audio playback being broadcasted in the MC 107.

In another embodiment, effective control of the playback of the streaming of the supplementary multimedia content is performed by the Streaming Management Unit 125.

In a non limiting example, at step 267, MSGW 109 may stop the streaming of the supplementary multimedia content to the MCS 105 if the second participant's EUT 103 sends the request to stop the broadcasting. Consequently at step 269 and at step 271, no broadcast of the supplementary multimedia content is performed by the MSGW 109 and by MCS 105.

In another non limiting example, yet at step 267, supplementary multimedia content is a video stream. The MSGW 109 pauses the video streaming of the supplementary multimedia content to the MCS 105 if the first participant's EUT 101 sends the request to pause the video broadcasting. Streaming Management Unit 125 provides then a still image extracted from the video stream to the MSGW 109. This still image being then streamed from the MSGW 109 to the MCS 105 and being further broadcasted in the MC 107 to the first participant's EUT 101 and the second participant's EUT 103.

In yet another non limiting example, first participant's EUT 101 solely sends requests to the MSGW 109 to control the streaming of the supplementary multimedia content in the MC 107, such as starting the playback, pausing it and then resuming it. In another non limiting example, second participant's EUT 103 sends requests to the MSGW 109 to control the streaming of the supplementary multimedia content in the MC 107 such as resuming the playback of the streaming, after that the first participant's EUT 101 had paused the said playback of the streaming.

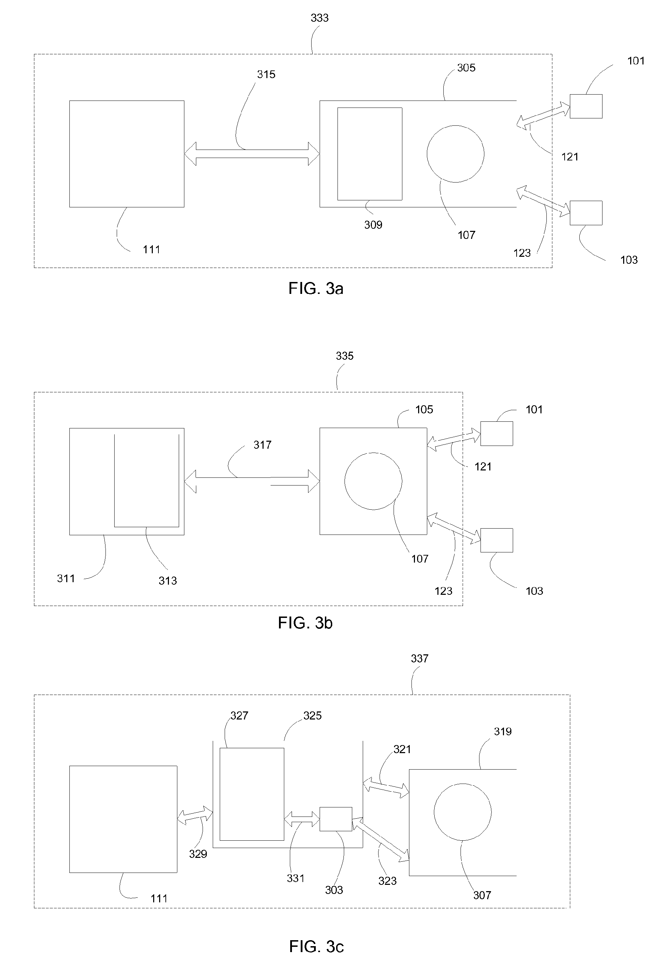

Referring to FIG. 3a, it is shown another embodiment of the invention. In this embodiment, a Multimedia Conferencing System entity (MCS) 305 comprises a Multimedia Streaming Gateway entity (MSGW) 309, MCS and MSGW having same functionalities as described in FIG. 1 a.

The MCS 305 is coupled with the Content Server entity (CS) 111 through an interface I_{CS-305} 315 which has same functionality with described first interface I_{CS-111} 115 and second interface I_{CS-113} 117, depicted in FIG. 1 a.

In this example, advantageously, the MCS 305 offers by default the capability to stream a supplementary multimedia content in the MC 107.

In another embodiment, a second Extended Multimedia Conferencing System entity 333 comprises:
- The Multimedia Streaming Gateway entity 309,
- The Multimedia Conferencing System entity 305,
- The Content Server Entity 111.

Referring to FIG. 3b, another embodiment of the invention is depicted. In this embodiment a Content Server entity (CS) 311 comprises a Multimedia Streaming Gateway entity (MSGW) 313, CS and MSGW having same functionalities as described in FIG. 1 a.

The CS 311 and the MCS 105 are coupled through an interface I_{MCS-311} 317 which has same functionality with described interface I_{MCS} from FIG. 1 a.

In this alternative realization of the invention, the CS 311 offers an additional feature, being able to connect in the MC 107.

In another embodiment, a third Extended Multimedia Conferencing System entity 335 comprises:
- The Multimedia Streaming Gateway entity 313,
- The Multimedia Conferencing System entity 105,
- The Content Server Entity 311.

Referring to FIG. 3c, it is shown yet another embodiment of the invention. In this embodiment, a third participant's End User Terminal (EUT) 325 comprises a Multimedia Streaming Gateway (MSGW) 327, MSGW that serve same functionalities as described in FIG. 1 a. The third participant's EUT 325 further simulates a virtual fourth participant's EUT 303. The third participant's EUT 325 is involved in a Multimedia Conference (MC) 307 hosted by a Multimedia Conferencing System (MCS) 319. This MCS 319 is not offering the possibility to stream a supplementary multimedia content in the MC 307. The third participant's EUT 325 interacts with the MCS 319 through an interface I_{EUT-325} 321. The virtual fourth participant's EUT 303 interacts with the MCS 319 through an interface I_{EUT-303} 323. Both interfaces have some of the functionalities of first interface I_{EUT-101} and second interface I_{EUT-103} mentioned in FIG. 1 a. In a non limiting example, depending on authorization levels defined by the MC 307 or the Multimedia Conferencing System entity 319, I_{EUT-325} 321 and I_{EUT-303} 323 may have limited features such as allowing only the functionalities to join and attend the MC 307.

Streaming of supplementary multimedia content located on the CS 111 is requested by third participant's EUT 325. An interface I_{MSGW-303} 331 couples the virtual fourth participant's EUT 303 with the MSGW 327, in a similar way as described in FIG. 1 a for first interface I_{MSGW-101} 127 and second interface I_{MSGW-103} 129. The request to stream supplementary multimedia content is addressed to the MSGW 327, and is then forwarded by the MSGW 327 to the CS 111 through an interface I_{MSGW-325} 329. Said interface have same functionalities as first interface I_{MSGW-101} 127 and second interface I_{MSGW-103} 129 described in FIG. 1 a.

Proceeding further, the supplementary multimedia content is streamed from the CS 111 to the MSGW 327 hosted by the third participant's EUT 325. Said content is streamed through the interface I_{MSGW-325} 329.

As streaming of supplementary multimedia content is available on the the MSGW 327, supplementary multimedia content is then provided by the MSGW 327 to the virtual fourth participant's End User Terminal 303 through interface I_{MSGW-303} 331. The virtual fourth participant's End User Terminal 303 streams then said supplementary multimedia content in the MC 307 hosted by the MCS 319, through the interface I_{EUT-325} 321.

In this example, additional connection resources for interacting in the MC and retrieving the supplementary multimedia content are consumed from third participant's EUT 325 connection capabilities. However this third participant's EUT 325 comprising the MSGW 327 offers the functionality to request the streaming of a supplementary multimedia content in the MC 307 hosted by the MCS 319 that does not offer this possibility.

In another embodiment, a fourth Extended Multimedia Conferencing System entity 337 comprises:
- The Multimedia Streaming Gateway entity 327,
- The first participant's End User Terminal 325,
- The Multimedia Conferencing System entity 319,
- The Content Server Entity 111.

The detailed embodiments hereinabove describe a method and systems to include a content stream in a Multimedia Conference, and particularly to propose ways to enable a participant to share a supplementary multimedia content in a conference with no or few drawbacks on his connection.

It should be appreciated by those skilled in the art that any block diagrams herein represent conceptual views of illustrative circuitry embodying the principles of the invention. Similarly, it will be appreciated that any flow charts, and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A method to include a supplementary multimedia content stream in a Multimedia Conference (107) hosted by a Multimedia Conferencing System entity (105), with a first participant connected in the Multimedia Conference (107) through a first End User Terminal (101), and a second participant connected in the Multimedia Conference (107) through a second End User Terminal (103), comprising the following steps performed in a Multimedia Streaming Gateway entity (109):
- the Multimedia Streaming Gateway entity (109) receives a request from the first participant's End User Terminal (101) to broadcast the supplementary multimedia content located on a Content Server entity (111),
- the Multimedia Streaming Gateway entity (109) connects to the Multimedia Conference (107),
- the Multimedia Streaming Gateway entity (109) issues a request to stream the supplementary multimedia content to the Content Server entity (111),
- the Multimedia Streaming Gateway entity (109) receives the streamed supplementary multimedia content from the Content Server entity (111),
- the Multimedia Streaming Gateway entity (109) provides the streamed supplementary multimedia content to the Multimedia Conferencing System entity (105),
- the Multimedia Streaming Gateway entity (109) controls different playback functions of broadcast of the supplementary multimedia content on the Multimedia Conference (107) by receiving a request for controlling the playback of said broadcast from the second participant's End User Terminal (103),
Followed by following step performed in the Multimedia Conferencing System entity (105):
- the Multimedia Conferencing System entity (105) broadcasts the streamed supplementary multimedia content by the Multimedia streaming Gateway entity (109) in the Multimedia Conference (107).

2. A method according to claim 1, comprising a step of registering the Multimedia Streaming Gateway entity (109) in the Multimedia Conferencing System entity (105).

3. A method according to claim 1 or 2, comprising a step of interfacing the Multimedia Streaming Gateway entity (109) to a first Content Server entity (111) and to a second Content Server entity (113).

4. A method according to any of claims 1 to 3, comprising a step wherein Multimedia Streaming Gateway entity (109) receives the request from the first participant's End User Terminal (101) to broadcast a supplementary multimedia content located on the Content Server entity (111), said request comprising a content identifier.

5. A method according to any of claims 1 to 4, comprising a step of adapting some characteristics of the streamed supplementary multimedia content, by the Multimedia Streaming Gateway entity (109), to the capabilities of the Multimedia Conferencing System entity (105).

6. A method according to any of claims 1 to 5, comprising a step of adapting the characteristics of the supplementary multimedia content stream by the Multimedia Streaming Gateway entity (109), to the characteristics of the Multimedia Conference (107).

7. A method according to any of claims 1 to 6, comprising the following steps performed by the Multimedia Conferencing System entity (105):
- Multimedia Conferencing System entity (105) receives the request to stream a supplementary multimedia content from the first participant's End User Terminal (101) to the Multimedia Conference (107),
- Multimedia Conferencing System entity (105) forwards the request to stream a supplementary multimedia content to the Multimedia Streaming Gateway entity (109).

8. A method according to any claims 1 to 7, comprising a step of controlling different playback functions of broadcast of the supplementary multimedia content on the Multimedia Conference (107) by the first participant's End User Terminal (101) through the Multimedia Streaming Gateway (109).

9. A method according to claim 8, comprising a step of controlling different playback functions of only one component of the supplementary multimedia content on the Multimedia Conference (107) by the first participant's End User Terminal (101) or the second participant's End User Terminal (103) through the Multimedia Streaming Gateway (109).

10. A Multimedia Streaming Gateway entity (109) to include broadcasting of a supplementary multimedia content stream in a Multimedia Conference (107) hosted by a Multimedia Conferencing System entity (105), with a first participant connected in the Multimedia Conference (107) through a first End User Terminal (101), and a second participant connected in the Multimedia Conference (107) through a second End User Terminal (103), and comprising:
- means for receiving a request from the first participant's End User Terminal (101) to broadcast the supplementary multimedia content located on a Content Server entity (111),
- means for connecting to the Multimedia Conference (107),
- means for issuing a request to stream the supplementary multimedia content to the Content Server entity (111),
- means for receiving the streamed supplementary multimedia content from the Content Server entity (111),
- means for providing the streamed supplementary multimedia content to the Multimedia Conferencing System entity (105),
- means for controlling different playback functions of broadcast of the supplementary multimedia content on the Multimedia Conference (107) by receiving a request for controlling the playback of said broadcast from the second participant's End User Terminal (103).

11. An Extended Multimedia Conferencing System entity (131; 333; 335; 337), comprising a Content Server entity (111; 311) and a Multimedia Conferencing System entity (105; 305; 319), to include broadcasting of a supplementary multimedia content stream located on the Content Server entity (111; 311), in a Multimedia Conference (107; 307) hosted by the Multimedia Conferencing System entity (105; 305; 319), with a first participant connected in the Multimedia Conference (107; 307) through a first End User Terminal (101; 325), and a second participant connected in the Multimedia Conference (107; 307) through a second End User Terminal (103; 303), and further comprising a Multimedia Streaming Gateway entity (109; 309; 313; 327) adapted to:
- receive a request from the first participant's End User Terminal (101; 325) to broadcast the supplementary multimedia content located on the Content Server entity (111; 311),
- connect to the Multimedia Conference (107; 307)
- issue a request to stream the supplementary multimedia content to the Content Server entity (111; 311),
- receive the streamed supplementary multimedia content from the Content Server entity (111; 311),
- provide the streamed supplementary multimedia content to the Multimedia Conferencing System entity (105; 305; 319),
- control different playback functions of broadcast of the supplementary multimedia content on the Multimedia Conference (107) by receiving a request for controlling the playback of said broadcast from the second participant's End User Terminal (103),
wherein said Multimedia Conferencing System entity (105; 305; 319) comprises means to broadcast the supplementary multimedia content provided by the Multimedia streaming Gateway entity (109; 309; 313; 327) in the Multimedia Conference (107; 307).

12. An Extended Multimedia Conferencing System entity (333) according to claim 11, wherein the Multimedia Conferencing System entity (305) comprises the Multimedia Streaming Gateway entity (309).

13. An Extended Multimedia Conferencing System entity (335) according to claim 11, wherein the Content Server entity (311) comprises the Multimedia Streaming Gateway entity (313).

14. An Extended Multimedia Conferencing System entity (337) according to claim 11, comprising the first participant's End User Terminal (325) wherein said first participant's End User Terminal (325) comprises the Multimedia Streaming Gateway entity (327).

15. An Extended Multimedia Conferencing System entity (131) according to claim 11, wherein the Multimedia Streaming Gateway entity (109) is a standalone device.

## Patentansprüche

1. Verfahren zum Einbinden eines Streams kontinuierlich gesendeter, ergänzender Multimediainhalte in eine Multimediakonferenz (107), die gehostet wird von einer Multimediakonferenz-Systemeinheit (105), wobei ein erster Teilnehmer der Multimediakonferenz (107) über ein erstes Endbenutzerterminal (101) und ein zweiter Teilnehmer der Multimediakonferenz (107) über ein zweites Endbenutzerterminal (103) angeschlossen ist, die folgenden, in einer Multimediastreaming-Gatewayeinheit (109) ausgeführten Schritte umfassend:
- Empfang einer Anfrage vom Endbenutzerterminal (101) des ersten Teilnehmers durch die Multimediastreaming-Gatewayeinheit (109) zum Senden der ergänzenden Multimediainhalte, die auf einer Inhaltsservereinheit (111) gespeichert sind;
- die Multimediastreaming-Gatewayeinheit (109) stellt eine Verbindung zur Multimediakonferenz (107) her,
- die Multimediastreaming-Gatewayeinheit (109) gibt eine Anfrage zum Streamen der ergänzenden Multimediainhalte an die Inhaltsservereinheit (111) aus,
- die Multimediastreaming-Gatewayeinheit (109) empfängt die gestreamten, ergänzenden Multimediainhalte von der Inhaltsservereinheit (111),
- die Multimediastreaming-Gatewayeinheit (109) stellt die gestreamten, ergänzenden Multimediainhalte der Multimediakonferenz-Systemeinheit (105) zur Verfügung,
- die Multimediastreaming-Gatewayeinheit (109) steuert verschiedene Abspielfunktionen für das Senden der ergänzenden Multimediainhalte in der Multimediakonferenz (107) durch den Empfang einer Anfrage zur Steuerung des Abspielens besagter Sendung seitens des Endbenutzerterminals (103) des zweiten Teilnehmers,
- Worauf der folgende Schritt folgt, der in der Multimediakonferenz-Systemeinheit (105) ausgeführt wird:
- die Multimediakonferenz-Systemeinheit (105) sendet die von der Multimediastreaming-Gatewayeinheit (109) gestreamten, ergänzenden Multimediainhalte im Rahmen der Multimediakonferenz (107).

2. Verfahren nach Anspruch 1, einen Schritt des Registrierens der Multimediastreaming-Gatewayeinheit (109) in der Multimediakonferenz-Systemeinheit (105) umfassend.

3. Verfahren nach Anspruch 1 oder 2, einen Schritt des Verbindens der Multimediastreaming-Gatewayeinheit (109) mit einer ersten Inhaltsservereinheit (111) und mit einer zweiten Inhaltsservereinheit (113) umfassend.

4. Verfahren nach einem beliebigen der Ansprüche 1 bis 3, einen Schritt umfassend, im Zuge dessen eine Multimediastreaming-Gatewayeinheit (109) die Anfrage vom Endbenutzerterminal (101) des ersten Teilnehmers zum Senden ergänzender Multimediainhalte erhält, die auf der Inhaltsservereinheit (111) liegen, wobei besagte Anfrage eine Inhaltskennung umfasst.

5. Verfahren nach einem beliebigen der Ansprüche 1 bis 4, einen von der Multimediastreaming-Gatewayeinheit (109) ausgeführten Schritt des Anpassens einiger Eigenschaften der gestreamten ergänzenden Multimediainhalte an die Ressourcen der Multimediakonferenz-Systemeinheit (105) umfassend.

6. Verfahren nach einem beliebigen der Ansprüche 1 bis 5, einen von der Multimediastreaming-Gatewayeinheit (109) ausgeführten Schritt des Anpassens der Eigenschaften des Streams der ergänzenden Multimediainhalte an die Eigenschaften der Multimediakonferenz (107) umfassend.

7. Verfahren nach einem beliebigen der Ansprüche 1 bis 6, die folgenden, von der Multimediakonferenz-Systemeinheit (105) ausgeführten Schritte umfassend:
- die Multimediakonferenz-Systemeinheit (105) empfängt die Anfrage zum Streamen ergänzender Multimediainhalte vom Endbenutzerterminal (101) des ersten Teilnehmers der Multimediakonferenz (107),
- die Multimediakonferenz-Systemeinheit (105) leitet die Anfrage zum Streamen der ergänzenden Multimediainhalte die Multimediastreaming-Gatewayeinheit (109) weiter.

8. Verfahren nach einem beliebigen der Ansprüche 1 bis 7, einen Schritt des Steuerns verschiedener Abspielfunktionen zum Senden der ergänzenden Multimediainhalte in der Multimediakonferenz (107) durch das Endbenutzerterminal (101) des ersten Teilnehmers über die Multimediastreaming-Gatewayeinheit (109) umfassend.

9. Verfahren nach Anspruch 8, einen Schritt des Steuerns verschiedener Abspielfunktionen einer einzigen Komponente der ergänzenden Multimediainhalte in der Multimediakonferenz (107) durch das Endbenutzerterminal (101) des ersten Teilnehmers oder das Endbenutzerterminal (103) des zweiten Teilnehmers über die Multimediastreaming-Gatewayeinheit (109) umfassend.

10. Multimediastreaming-Gatewayeinheit (109) zum Einbinden des Sendens eines Streams kontinuierlich gesendeter, ergänzender Multimediainhalte in eine Multimediakonferenz (107), die gehostet wird von einer Multimediakonferenz-Systemeinheit (105), wobei ein erster Teilnehmer der Multimediakonferenz (107) über ein erstes Endbenutzerterminal (101) und ein zweiter Teilnehmer der Multimediakonferenz (107) über ein zweites Endbenutzerterminal (101) angeschlossen ist, Folgendes umfassend:
- Mittel für den Empfang einer Anfrage vom Endbenutzerterminal (101) des ersten Teilnehmers zum Senden der ergänzenden Multimediainhalte, die auf einer Inhaltsservereinheit (111) gespeichert sind;
- Mittel, um die Verbindung zur Multimediakonferenz (107) herzustellen,
- Mittel für das Ausgeben einer Anfrage zum Streamen der ergänzenden Multimediainhalte an die Inhaltsservereinheit (111),
- Mittel für den Empfang der gestreamten, ergänzenden Multimediainhalte von der Inhaltsservereinheit (111),
- Mittel, um die gestreamten, ergänzenden Multimediainhalte der Multimediakonferenz-Systemeinheit (105) zur Verfügung zu stellen,
- Mittel zur Steuerung verschiedener Abspielfunktionen für das Senden der ergänzenden Multimediainhalte in der Multimediakonferenz (107) durch den Empfang einer Anfrage zur Steuerung des Abspielens besagter Sendung seitens des Endbenutzerterminals (103) des zweiten Teilnehmers.

11. Erweiterte Multimediakonferenz-Systemeinheit (131; 333; 335; 337), eine Inhaltsservereinheit (111, 311) und eine Multimediakonferenz-Systemeinheit (105; 305; 319) umfassend, um das Senden eines auf der Inhaltsservereinheit (111; 311) gespeicherten Streams ergänzender Multimediainhalte in eine Multimediakonferenz (107; 307) aufzunehmen, die gehostet wird von der Multimediakonferenz-Systemeinheit (105; 305; 319), wobei ein erster Teilnehmer über ein erstes Endbenutzerterminal (101; 325) und ein zweiter Teilnehmer über ein zweites Endbenutzerterminal (103; 303) an die Multimediakonferenz (107; 307) angeschlossen ist und die Multimediastreaming-Gatewayeinheit (109; 309; 313; 327) ausgelegt ist für:
- den Empfang einer Anfrage vom Endbenutzerterminal (101; 325) des ersten Teilnehmers zum Senden der ergänzenden Multimediainhalte, die auf der Inhaltsservereinheit (111; 311) gespeichert sind;
- das Herstellen einer Verbindung zu der Multimediakonferenz (107; 307),
- das Ausgeben einer Anfrage zum Streamen der ergänzenden Multimediainhalte an die Inhaltsservereinheit (111; 311),
- den Empfang der gestreamten, ergänzenden Multimediainhalte von der Inhaltsservereinheit (111; 311),
- das Verfügbarmachen der gestreamten, ergänzenden Multimediainhalte für die Multimediakonferenz-Systemeinheit (105; 305; 319),
- die Steuerung verschiedener Abspielfunktionen für das Senden der ergänzenden Multimediainhalte in der Multimediakonferenz (107) durch den Empfang einer Anfrage zur Steuerung des Abspielens besagter Sendung seitens des Endbenutzerterminals (103) des zweiten Teilnehmers.
wobei besagte Multimediakonferenz-Systemeinheit (105; 305; 319) Mittel für das Senden der ergänzenden Multimediainhalte umfasst, die von der Multimediastreaming-Gatewayeinheit (109; 309; 313; 327) in der Multimediakonferenz (107; 307) zur Verfügung gestellt werden.

12. Erweiterte Multimediakonferenz-Systemeinheit (333) nach Anspruch 11, wobei die Multimediakonferenz-Systemeinheit (305) die Multimediastreaming-Gatewayeinheit (309) umfasst.

13. Erweiterte Multimediakonferenz-Systemeinheit (335) nach Anspruch 11, wobei die Inhaltsservereinheit (311) die Multimediastreaming-Gatewayeinheit (313) umfasst.

14. Erweiterte Multimediakonferenz-Systemeinheit (337) nach Anspruch 11, das Endbenutzerterminal (325) des ersten Teilnehmers umfassend, wobei besagtes Endbenutzerterminal (325) des ersten Teilnehmers die Multimediastreaming-Gatewayeinheit (327) umfasst.

15. Erweiterte Multimediakonferenz-Systemeinheit (131) nach Anspruch 11, wobei die Multimediastreaming-Gatewayeinheit (109) eine selbständige Vorrichtung ist.

## Revendications

1. Procédé pour inclure un flux de contenu multimédia supplémentaire dans une conférence multimédia (107) hébergée par une entité de système de conférence multimédia (105), avec un premier participant connecté à la conférence multimédia (107) par l'intermédiaire d'un premier terminal d'utilisateur final (101), et un deuxième participant connecté à la conférence multimédia (107) par l'intermédiaire d'un deuxième terminal d'utilisateur final (103), comprenant les étapes suivantes exécutées dans une entité de passerelle de diffusion en flux multimédia (109) :
- l'entité de passerelle de diffusion en flux multimédia (109) reçoit une demande provenant du terminal d'utilisateur final du premier participant (101) de diffusion du contenu multimédia supplémentaire situé sur une entité de serveur de contenu (111),
- l'entité de passerelle de diffusion en flux multimédia (109) est connectée à la conférence multimédia (107),
- l'entité de passerelle de diffusion en flux multimédia (109) délivre une demande de diffusion en flux du contenu multimédia supplémentaire à l'entité de serveur de contenu (111),
- l'entité de passerelle de diffusion en flux multimédia (109) reçoit le contenu multimédia supplémentaire diffusé en flux provenant de l'entité de serveur de contenu (111),
- l'entité de passerelle de diffusion en flux multimédia (109) fournit le contenu multimédia supplémentaire diffusé en flux à l'entité de système de conférence multimédia (105),
- l'entité de passerelle de diffusion en flux multimédia (109) commande différentes fonctions de lecture de diffusion du contenu multimédia supplémentaire sur la conférence multimédia (107) en recevant une demande de commande de la lecture de ladite diffusion provenant du terminal d'utilisateur final du deuxième participant (103),
suivies de l'étape suivante exécutée dans l'entité de système de conférence multimédia (105) :
- l'entité de système de conférence multimédia (105) diffuse le contenu multimédia supplémentaire diffusé en flux au moyen de l'entité de passerelle de diffusion en flux multimédia (109) dans la conférence multimédia (107).

2. Procédé selon la revendication 1, comprenant une étape d'enregistrement de l'entité de passerelle de diffusion en flux multimédia (109) dans l'entité de système de conférence multimédia (105).

3. Procédé selon la revendication 1 ou 2, comprenant une étape d'interfaçage de l'entité de passerelle de diffusion en flux multimédia (109) avec une première entité de serveur de contenu (111) et une deuxième entité de serveur de contenu (113).

4. Procédé selon l'une quelconque des revendications 1 à 3, comprenant une étape dans laquelle l'entité de passerelle de diffusion en flux multimédia (109) reçoit la demande provenant du terminal d'utilisateur final du premier participant (101) de diffusion d'un contenu multimédia supplémentaire situé sur l'entité de serveur de contenu (111), ladite demande comprenant un identifiant de contenu.

5. Procédé selon l'une quelconque des revendications 1 à 4, comprenant une étape d'adaptation de certaines caractéristiques du contenu multimédia supplémentaire diffusé en flux, au moyen de l'entité de passerelle de diffusion en flux multimédia (109), aux capacités de l'entité de système de conférence multimédia (105).

6. Procédé selon l'une quelconque des revendications 1 à 5, comprenant une étape d'adaptation des caractéristiques du flux de contenu multimédia supplémentaire, au moyen de l'entité de passerelle de diffusion en flux multimédia (109), aux caractéristiques de la conférence multimédia (107).

7. Procédé selon l'une quelconque des revendications 1 à 6, comprenant les étapes suivantes exécutées par l'entité de système de conférence multimédia (105) :
- l'entité de système de conférence multimédia (105) reçoit la demande de diffusion en flux d'un contenu multimédia supplémentaire provenant du terminal d'utilisateur final du premier participant (101) vers la conférence multimédia (107),
- l'entité de système de conférence multimédia (105) transfère la demande de diffusion en flux d'un contenu multimédia supplémentaire vers l'entité de passerelle de diffusion en flux multimédia (109).

8. Procédé selon l'une quelconque des revendications 1 à 7, comprenant une étape de commande de différentes fonctions de lecture de diffusion du contenu multimédia supplémentaire sur la conférence multimédia (107) au moyen du terminal d'utilisateur final du premier participant (101) par l'intermédiaire de la passerelle de diffusion en flux multimédia (109).

9. Procédé selon la revendication 8, comprenant une étape de commande de différentes fonctions de lecture d'un seul composant du contenu multimédia supplémentaire sur la conférence multimédia (107) au moyen du terminal d'utilisateur final du premier participant (101) ou du terminal d'utilisateur final du deuxième participant (103) par l'intermédiaire de la passerelle de diffusion en flux multimédia (109).

10. Entité de passerelle de diffusion en flux multimédia (109) pour inclure la diffusion d'un flux de contenu multimédia supplémentaire dans une conférence multimédia (107) hébergée par une entité de système de conférence multimédia (105), avec un premier participant connecté à la conférence multimédia (107) par l'intermédiaire d'un premier terminal d'utilisateur final (101), et un deuxième participant connecté à la conférence multimédia (107) par l'intermédiaire d'un deuxième terminal d'utilisateur final (103), et comprenant :
- des moyens pour recevoir une demande provenant du terminal d'utilisateur final du premier participant (101) de diffusion du contenu multimédia supplémentaire situé sur une entité de serveur de contenu (111),
- des moyens pour se connecter à la conférence multimédia (107),
- des moyens pour délivrer une demande de diffusion en flux du contenu multimédia supplémentaire à l'entité de serveur de contenu (111),
- des moyens pour recevoir le contenu multimédia supplémentaire diffusé en flux provenant de l'entité de serveur de contenu (111),
- des moyens pour fournir le contenu multimédia supplémentaire diffusé en flux à l'entité de système de conférence multimédia (105),
- des moyens pour commander différentes fonctions de lecture de diffusion du contenu multimédia supplémentaire sur la conférence multimédia (107) en recevant une demande de commande de la lecture de ladite diffusion provenant du terminal d'utilisateur final du deuxième participant (103).

11. Entité de système de conférence multimédia étendu (131 ; 333; 335; 337), comprenant une entité de serveur de contenu (111 ; 311) et une entité de système de conférence multimédia (105; 305; 319), pour inclure la diffusion d'un flux de contenu multimédia supplémentaire situé sur l'entité de serveur de contenu (111 ; 311), dans une conférence multimédia (107 ; 307) hébergée par l'entité de système de conférence multimédia (105 ; 305; 319), avec un premier participant connecté à la conférence multimédia (107 ; 307) par l'intermédiaire d'un premier terminal d'utilisateur final (101 ; 325) et un deuxième participant connecté à la conférence multimédia (107 ; 307) par l'intermédiaire d'un deuxième terminal d'utilisateur final (103 ; 303) et comprenant en outre une entité de passerelle de diffusion en flux multimédia (109; 309; 313; 327) adaptée pour :
- recevoir une demande provenant du terminal d'utilisateur final du premier participant (101 ; 325) de diffusion du contenu multimédia supplémentaire situé sur l'entité de serveur de contenu (111 ; 311),
- se connecter à la conférence multimédia (107 ; 307),
- délivrer une demande de diffusion en flux du contenu multimédia supplémentaire à l'entité de serveur de contenu (111 ; 311),
- recevoir le contenu multimédia supplémentaire diffusé en flux provenant de l'entité de serveur de contenu (111 ; 311),
- fournir le contenu multimédia supplémentaire diffusé en flux à l'entité de système de conférence multimédia (105 ; 305 ; 319),
- commander différentes fonctions de lecture de diffusion du contenu multimédia supplémentaire sur la conférence multimédia (107) en recevant une demande de commande de la lecture de ladite diffusion provenant du terminal d'utilisateur final du deuxième participant (103),
dans laquelle ladite entité de système de conférence multimédia (105; 305; 319) comprend des moyens de diffusion du contenu multimédia supplémentaire fourni par l'entité de passerelle de diffusion en flux multimédia (109; 309; 313 ; 327) dans la conférence multimédia (107 ; 307).

12. Entité de système de conférence multimédia étendu (333) selon la revendication 11, dans laquelle l'entité de système de conférence multimédia (305) comprend l'entité de passerelle de diffusion en flux multimédia (309).

13. Entité de système de conférence multimédia étendu (335) selon la revendication 11, dans laquelle l'entité de serveur de contenu (311) comprend l'entité de passerelle de diffusion en flux multimédia (313).

14. Entité de système de conférence multimédia étendu (337) selon la revendication 11, comprenant le terminal d'utilisateur final du premier participant (325) dans laquelle ledit terminal d'utilisateur final du premier participant (325) comprend l'entité de passerelle de diffusion en flux multimédia (327).

15. Entité de système de conférence multimédia étendu (131) selon la revendication 11, dans laquelle l'entité de passerelle de diffusion en flux multimédia (109) est un dispositif autonome.
